Europäisches Patentamt

European Patent Office

Office européen des brevets

(19)

(11) **EP 1 471 651 A2**

(12) **EUROPÄISCHE PATENTANMELDUNG**

(43) Veröffentlichungstag:
   **27.10.2004 Patentblatt 2004/44**

(51) Int Cl.⁷: **H04B 1/10**

(21) Anmeldenummer: **04005741.6**

(22) Anmeldetag: **11.03.2004**

(84) Benannte Vertragsstaaten:
   **AT BE BG CH CY CZ DE DK EE ES FI FR GB GR
   HU IE IT LI LU MC NL PL PT RO SE SI SK TR**
   Benannte Erstreckungsstaaten:
   **AL LT LV MK**

(30) Priorität: **25.04.2003 DE 10318754**

(71) Anmelder: **EADS Deutschland GmbH
   85521 Ottobrunn (DE)**

(72) Erfinder: **Gottscheber, Holger
   89160 Dornstadt (DE)**

(74) Vertreter: **Meel, Thomas, Patentassessor
   c/o Dornier GmbH
   FCL6
   88039 Friedrichshafen (DE)**

(54) **Verfahren zur Vergrösserung des störungsfreien Dynamikbereichs von nichtlinearen signalverarbeitenden Komponenten**

(57) Die Erfindung betrifft ein Verfahren zur Vergrößerung des störungsfreien Dynamikbereichs von nicht-linearen signalverarbeitenden Komponenten in Emp-fängersystemen bei der Umsetzung von Eingangsfre-quenzen $f_{in}$ in Ausgangsfrequenzen $f_{out}$. Gemäß der Er-findung wird für mindestens eine Ausgangsfrequenz $f_{out,s}$, $f_{out1,s}$, $f_{outs,2}$ aus dem Ausgangssignal der Komponente mindestens eine Linearkombination aus mindestens einer Eingangsfrequenz $f_{in,t}$, $f_{in,b}$ und fest vorgegebener Oszillatorfrequenzen $f_{LOn}$ der Komponenten berechnet, welche mit einer beliebigen Ausgangsfrequenz $f_{out,t}$ der Komponente verglichen wird, wobei die Ausgangsfrequenz $f_{out,s}$, $f_{out1,s}$, $f_{outs,2}$ dann als Spur erkannt und aus dem Ausgangssignal der Komponente eliminiert wird, wenn die berechnete Linearkombination innerhalb eines vorgebbaren Frequenz- und Leistungsbereichs einer beliebigen Ausgangsfrequenz $f_{out,t}$ der Komponente entspricht.

Fig.

**Beschreibung**

Die Erfindung betrifft ein Verfahren zur Vergrößerung des störungsfreien Dynamikbereichs von signalverarbeitenden nichtlinearen Komponenten.

Bei der Signalverarbeitung von Empfangssignalen von z.B. Radaranlagen erzeugen nichtlineare Komponenten, z.B. Verstärker, Mischer oder A-/D-Wandler, in Empfängersystemen ungewollte Signale, sogenannte Spurs. Geeignet gewählte Zwischenoder Oszillatorfrequenzen verhindern nur unzureichend die Erzeugung dieser künstlichen Signale (Spurs). Durch die erzeugten Spurs wird der störungsfreie Dynamikbereich, auch als SFDR - spurious free dynamic range - bezeichnet, verringert. Dies wirkt sich ungünstig auf die Falschalarmrate aus. Weitere Nachteile entstehen aus der reduzierten Erkennungsleistung tatsächlicher Ziele.

Aufgabe der Erfindung ist es, ein Verfahren anzugeben mit dem es möglich ist, zur Vergrößerung des störungsfreien Dynamikbereichs die in der Signalverarbeitung künstlich erzeugte Signale (Spurs) zu entfernen.

Diese Aufgabe wird durch das Verfahren gemäß Patentanspruch 1 gelöst. Vorteilhafte Ausführungen der Erfindung sind Gegenstand von Unteransprüchen.

Erfindungsgemäß wird für mindestens eine Ausgangsfrequenz $f_{out,s}$, $f_{out1,s}$, $f_{outs,2}$ aus dem Ausgangssignal der Komponente mindestens eine Linearkombination aus mindestens einer Eingangsfrequenz $f_{in,t}$, $f_{in,b}$ und fest vorgegebener Oszillatorfrequenzen $f_{LOn}$ der Komponenten berechnet, welche mit einer beliebigen Ausgangsfrequenz $f_{out,t}$ der Komponente verglichen wird, wobei die Ausgangsfrequenz $f_{out,s}$ dann als Spur erkannt und aus dem Ausgangssignal der Komponente eliminiert wird, wenn die berechnete Linearkombination innerhalb eines vorgebbaren Frequenz- und Leistungsbereichs einer beliebigen Ausgangsfrequenz $f_{out,t}$ der Komponente entspricht.

Die Linearkombinationen können vorteilhaft Linearkombinationen von Mischerharmonischen sein. In einer weiteren vorteilhaften Ausführung der Erfindung können die Linearkombinationen auch Linearkombinationen von Intermodulationen sein. Selbstverständlich kann das erfindungsgemäße Verfahren auch mit beiden Kombinationstypen betrieben werden. So kann z.B. die Ausgangsfrequenz $f_{out,s}$, $f_{out1,s}$, $f_{outs,2}$ einer Komponente zuerst auf Übereinstimmung mit einer Linearkombination von Mischerharmonischen und anschließend auf Übereinstimmung mit einer Linearkombination von Intermodulationen oder umgekehrt untersucht werden. Die Ausgangsfrequenz $f_{out,s}$, $f_{out1,s}$, $f_{outs,2}$ ist insbesondere eine beliebige Ausgangsfrequenz der Komponente. Zweckmäßig wird das erfindungsgemäße Verfahren für jede Ausgangsfrequenz $f_{out,s}$, $f_{out1,s}$, $f_{outs,2}$ durchgeführt.

Mischerkombinationen entstehen z.B. bei der Umsetzung eines Signals in einem Mischer. Dabei wird die Frequenz $f_{in}$ eines Eingangssignals in eine neue Frequenz $f_{out}$ umgesetzt gemäß $f_{out} = |A \cdot f_{in} + B \cdot f_{LO}|$. $f_{LO}$ ist dabei die Oszillatorfrequenz des Mischers und $A, B \in Z$ sind vorgebbare Mischungsparameter. Bei einem üblichen Mischungsprozess gilt : $|A|=|B|=1$. Andere Parameterwerte führen üblicherweise zu gedämpften Ausgangssignalen. Der durch die Dämpfung verursachte Leistungsverlust $\Delta P$ kann berechnet werden und ist dabei insbesondere von der Leistung des Mischeroszillatores, der Eingangsleistung des Eingangssignals und den Parametern A und B abhängig. Bei vorgegebener Leistung des Mischeroszillators und vorgegebener Leistung des Eingangssignals ist der Leistungsverlust $\Delta P$ in Abhängigkeit der Parameter A und B bestimmbar.

Intermodulationen entstehen bei der Mischung von zwei Signalen. Dabei werden die Frequenzen $f_{in1}$ und $f_{in2}$ eines Eingangssignals in eine neue Frequenz $f_{out}$ umgesetzt, gemäß $f_{out} = |A \cdot f_{in1} + B \cdot f_{in2}|$.

Das erfindungsgemäße Verfahren läuft dabei für den Fall einer Linearkombination von Mischerharmonischen wie folgt ab. Aus dem Ausgangssignal wird eine beliebige Ausgangsfrequenz $f_{out,s}$ ausgewählt und als Verursacher angenommen. Die Auswahl der Ausgangsfrequenz $f_{out,s}$ kann vorteilhaft in Abhängigkeit der zugehörigen Leistung erfolgen, wobei die zu untersuchenden Ausgangsfrequenzen $f_{out,s}$ zunächst nach ihrer Leistung sortiert werden. Anschließend wird vorteilhaft die ursprüngliche Eingangsfrequenz $f_{in,b}$ vor der Signalverarbeitung in der Komponente gemäß der allgemeinen Formel

$$f_{in,b} = \left| A \cdot f_{out,s} + \sum_{n=1}^{N} B_n f_{LOn} \right|$$

berechnet. Mit $f_{LOn}$ ist dabei die Oszillatorfrequenz der n-ten Stufe der N-stufigen Komponente bezeichnet. Der jeweilige Wert der Parameter A und $B_n$ beträgt, wie oben beschrieben, +1 oder-1.

Im nächsten Schritt werden Linearkombinationen der Ausgangsfrequenz $f^z_{out,s}$ berechnet. Hierzu werden für vorgebbare Kombinationen von Parameterpaaren A und $B_n$ mit $A, B_n \in Z$, wobei der Wertebereich von A und $B_n$ jeweils vorgebbar ist, Linearkombinationen gemäß

$$f_{out,s}^{z} = \left| A \cdot f_{in,b} + \sum_{n=1}^{N} B_n \cdot f_{LOn} \right|$$

mit

A, B$_n$ :    vorgebbare Parameter mit $A, B_n \in Z$,
f$_{in,b}$ :    Eingangsfrequenz vor der Komponente
f$_{LOn}$ :    Oszillatorfrequenz der n-ten Stufe der nichtlinearen Komponente,
N :    Anzahl der Stufen,
z :    Laufvariable der berechneten Linearkombinationen

berechnet.

Die Wertepaare der Parameter A, B$_n$ können z.B. in einem Speicher fest abgelegt sein. Nachfolgende Tabelle zeigt beispielhaft einige Wertepaare der Parameter A, B.

Die angegebenen Wertepaare können für jede Stufe beliebig kombiniert werden. Außerdem ist in der Tabelle die Signaldämpfung ∆P eines für eine einstufige Komponente mit den jeweiligen Parametern A und B berechneten Ausgangssignals aufgeführt.

| A | B | ∆P in dB |
|---|---|----------|
| 1 | 1 | 0 |
| 2 | 1 | ∆P-41 |
| 3 | 1 | 2 ∆P-28 |
| 1 | 2 | -35 |
| 2 | 2 | ∆P-39 |
| 3 | 2 | 2 ∆P-44 |
| 1 | 3 | -10 |
| 2 | 3 | ∆P-32 |

∆P berechnet sich dabei gemäß $\Delta P = P_{in} - P_{LO}$
mit

P$_{in}$    Leistung des Eingangssignals,
P$_{LO}$    Leistung der Oszillatorfrequenz f$_{LO}$ nichtlinearen Komponente.

Selbstverständlich können auch andere Kombinationen der Parameter A und B verwendet werden. Eine Übersicht von Kombinationsmöglichkeiten findet sich z.B. in [2].

In einem nächsten Schritt wird überprüft, ob ein mittels Linearkombination berechnetes Ausgangssignal f$^z_{out,s}$ innerhalb eines vorgebbaren Frequenz- und Leistungsbereichs einem tatsächlichen Ausgangssignal f$_{out,t}$ der Komponente entspricht. Trifft dieser Fall zu, dann ist die aus dem Ausgangssignal ausgewählte und als Spur angenommen Ausgangsfrequenz f$_{out,s}$ tatsächlich ein Verursacher (Spur) und wird aus dem Ausgangssignal eliminiert.

Diese Überprüfung wird insbesondere für alle vorgegebenen Wertepaare A, B$_n$ und alle tatsächlichen Ausgangsfrequenzen f$_{out,t}$ im Ausgangssignal der Komponente durchgeführt.

Für den beispielhaften Fall der Untersuchung der M-ten einer N-stufigen nichtlinearen Komponente mit Linearkombinationen von Intermodulationen läuft das erfindungs-gemäße Verfahren wie folgt ab. Hierbei wird beispielhaft angenommen, dass die M-te Stufe einer N-stufigen nichtlinearen Komponente eine Intermodulation erzeugt.

Aus dem Ausgangssignal werden zwei beliebige Ausgangsfrequenzen f$_{out1,s}$ und f$_{out2,s}$ ausgewählt. Auch hier kann die Auswahl der Ausgangsfrequenzen f$_{out1,s}$ und f$_{out2,s}$ vorteilhaft nach der zugehörigen Leistung erfolgen, woebi die zu untersuchenden Ausgangsfrequenzen f$_{out1,s}$ und f$_{out2,s}$ zunächst nach ihrer Leistung sortiert werden. Anschließend werden vorteilhaft die entsprechenden Eingangsfrequenzen f$_{in1,b}$ und f$_{in2,b}$ berechnet.

Im nächsten Schritt werden Linearkombinationen für die Ausgangsfrequenz f$^z_{out,b}$ berechnet. Hierzu werden für vorgebbare Kombinationen von Parameterpaaren A,B und C mit $A,B,C \in Z,$ wobei der Wertebereich von A, B und C jeweils vorgebbar ist, Linearkombinationen gemäß

$$f_{out,b}^{z} = \left| C \left| A \left| f_{in1,s} + \sum_{n=1}^{M} x(n) \cdot f_{LOn} \right| \pm B \left| f_{in2,s} + \sum_{n=1}^{M} x(n) \cdot f_{LOn} \right| \right| + \sum_{n=M+1}^{N} x(n) \cdot f_{LOn} \right|$$

mit

A, B, C: vorgebbare Parameter mit $A, B \in Z$,
$f_{in1,s}$: erstes Eingangssignal vor der Komponente,
$f_{in2,s}$: zweites Eingangssignal vor der Komponente,
$f_{LOn}$: Oszillatorfrequenz der n-ten Stufe der nichtlinearen Komponente,
M: Anzahl der Stufen der nichtlinearen Komponente,
N: Position der zu untersuchenden nichtlinearen Komponente,
x(n): vorgebbare Funktion mit Werten +1 und -1,
z: Laufvariable der berechneten Linearkombinationen

berechnet.

Mit dem Term 1 wird die Eingangsfrequenz $f_{in1,s}$ bis zur M-ten Stufe der nichtlinearen Komponente geschoben. Mit dem Term 2 wird analog die Eingangsfrequenz $f_{in2,s}$ bis zur M-ten Stufe der nichtlinearen Komponente geschoben. Der Term 3 berechnet die Intermodulation an der M-Stufe der nichtlinearen Komponente. Mit dem letzten Term wird das Intermodulationsprodukt zur N-ten Stufe (Ausgang) der nichtlinearen Komponente geschoben, wo das berechnete Ausgangssignal $f_{out,b}$ anliegt.

In einem nächsten Schritt wird überprüft, ob das mittels Linearkombination berechnete Ausgangssignal $f_{out,b}$ innerhalb eines vorgebbaren Frequenz- und Leistungsbereichs einem tatsächlichen Ausgangssignal $f_{out,t}$ der Komponente entspricht. Trifft dieser Fall zu, dann ist die aus dem Ausgangssignal ausgewählte und als Spur angenommen Ausgangsfrequenz $f_{out1,s}$, $f_{out2,s}$ tatsächlich eine Spur und wird aus dem Ausgangssignal eliminiert.

Diese Überprüfung wird insbesondere für alle vorgegebenen Wertepaare A, B und alle Ausgangsfrequenzen $f_{out}$ im Ausgangssignal der Komponente durchgeführt.

Die Parameter A und B können insbesondere aus einem, einem Fachmann bekannten Spur-Chart-Diagramm (Fig.) entnommen werden [1]. Der Spur-Chart zeigt eine Übertragung einer Eingangsfrequenz $f_{in}$ in eine Ausgangsfrequenz normiert auf die Oszillatorfrequenz $f_{LO}$. Eine Gerade 1 mit der Steigung 1 bedeutet dabei die gewünschte Übertragung von $f_{in}$ zu $f_{out}$. Die beispielhafte Darstellung zeigt, dass z.B. ein Eingangssignal $f_{in}/f_{LO})=0,17$ zu $f_{out}/f_{LO}=1.17$ übertragen wird. Gleichzeitig entsteht allerdings eine Spur bei $f_{out}/f_{LO}=1,2$ (Gerade 2) und $f_{out}/f_{LO}=1,3$ (Gerade 3).

Der markierte Bereich B zeigt den zu untersuchende vorgebbaren Frequenzbereich. Die Größe des Fensters kann dabei je nach Anwendungsfall vorgegeben werden.

Ein Vorteil des erfindungsgemäßen Verfahrens ist, dass die Falschalarmrate deutlich reduziert wird. Außerdem wird die Erkennungsleistung von tatsächlichen Zielen erhöht, wobei das System durch die Verarbeitung künstlich erzeugter Signale nicht unnötig belastet wird. Ein weiterer Vorteil ist, dass je nach Vorgabe der Parameter A und B sowie der zu untersuchenden Frequenz- und Leistungsbereiche das Verfahren auf beliebigen Empfängerkonzepten anpassbar ist.

**Literatur**

[1] "Mixer Spur Calculator" auf Internet-Seite http://www.hittite.com
[2] B. Henderson, "Reliably Predict Mixer Suppression", Journal Microwaves and RF, 1983, p 64 ff

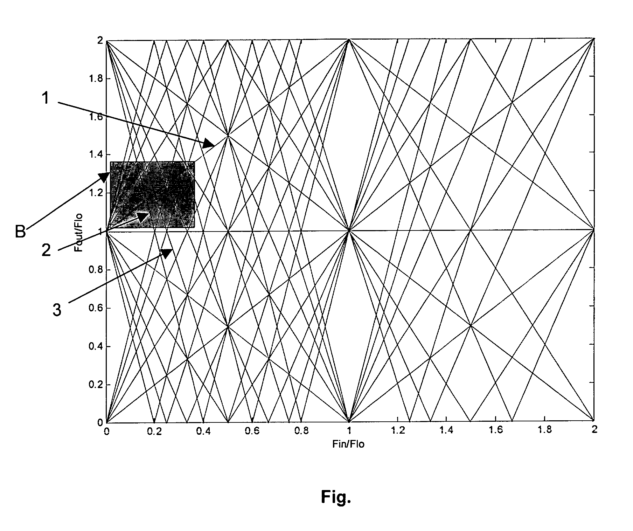

**Patentansprüche**

1. Verfahren zur Vergrößerung des störungsfreien Dynamikbereichs von nichtlinearen signalverarbeitenden Komponenten in Empfängersystemen bei der Umsetzung von Eingangsfrequenzen $f_{in}$ in Ausgangsfrequenzen $f_{out}$, **da-**

**durch gekennzeichnet, dass** für mindestens eine Ausgangsfrequenz $f_{out,s}$, $f_{out1,s}$, $f_{outs,2}$ aus dem Ausgangssignal der Komponente mindestens eine Linearkombination aus mindestens einer Eingangsfrequenz $f_{in,t}$,$f_{in,b}$ und fest vorgegebener Oszillatorfrequenzen $f_{LOn}$ der Komponenten berechnet wird, welche mit einer beliebigen Ausgangsfrequenz $f_{out,t}$ der Komponente verglichen wird, wobei die Ausgangsfrequenz $f_{out,s}$, $f_{out1,s}$, $f_{outs,2}$ dann als Spur erkannt und aus dem Ausgangssignal der Komponente eliminiert wird, wenn die berechnete Linearkombination innerhalb eines vorgebbaren Frequenz- und Leistungsbereichs einer beliebigen Ausgangsfrequenz $f_{out,t}$ der Komponente entspricht.

2. Verfahren nach Anspruch 1, **dadurch gekennzeichnet, dass** die zu untersuchenden Ausgangsfrequenzen $f_{out,s}$, $f_{out1,s}$, $f_{outs,2}$ im Ausgangssignal nach ihrer Leistung auf- oder absteigend sortiert werden.

3. Verfahren nach Anspruch 1 oder 2, **dadurch gekennzeichnet, dass** die vorgebbare Linearkombination eine Linearkombination von Mischerharmonischen ist.

4. Verfahren nach Anspruch 2, **dadurch gekennzeichnet, dass** für jede zu untersuchende Ausgangsfrequenz $f_{out,s}$ des Ausgangssignals die ursprüngliche Eingangsfrequenz $f_{in,b}$ vor der signalverarbeitenden nichtlinearen Komponente berechnet wird.

5. Verfahren nach Anspruch 4, **dadurch gekennzeichnet, dass** für die Ausgangsfrequenz $f_{out,s}$ Linearkombinationen gemäß

$$f_{out,s}^{z} = \left| A \cdot f_{in,b} + \sum_{n=1}^{N} B_n \cdot f_{LOn} \right|$$

mit

$A, B_n:$     vorgebbare Parameter mit $A, B_n \in Z,$
$f_{in,b}:$     Eingangsfrequenz vor der nichtlinearen Komponente
$f_{LOn}:$     Oszillatorfrequenz der n-ten Stufe der nichtlinearen Komponente,
$N:$     Anzahl der Stufen,
$z:$     Laufvariable der berechneten Linearkombinationen

berechnet wird.

6. Verfahren nach Anspruch 2, **dadurch gekennzeichnet, dass** die vorgebbare Linearkombination eine Linearkombination von Intermodulationen ist.

7. Verfahren nach Anspruch 6, **dadurch gekennzeichnet, dass** die Ausgangsfrequenz $f_{out,b}$ mit einer Linearkombination gemäß

$$f_{out,b}^{z} = \left| C \left| A \left| f_{in1,s} + \sum_{n=1}^{M} x(n) \cdot f_{LOn} \right| \pm B \left| f_{in2,s} + \sum_{n=1}^{M} x(n) \cdot f_{LOn} \right| \right| + \sum_{n=M+1}^{N} x(n) \cdot f_{LOn} \right|$$

mit

$A, B, C:$     vorgebbare Parameter mit $A, B \in Z,$
$f_{in1,s}:$     erstes Eingangssignal vor der nichtlinearen Komponente,
$f_{in2,s}:$     zweites Eingangssignal vor der nichtlinearen Komponente,
$f_{LOn}:$     Oszillatorfrequenz der n-ten Stufe der nichtlinearen Komponente,
$N:$     Anzahl der Stufen der nichtlinearen Komponente
$M:$     Position der zu untersuchenden nichtlinearen Komponente,
$x(n):$     vorgebbare Funktion mit Werten +1 und -1,

z : Laufvariable der berechneten Linearkombinationen

berechnet wird.

**Fig.**